# EUROPEAN PATENT SPECIFICATION

(11) **EP 1 813 630 B1**
(45) Date of publication and mention of the grant of the patent: **03.03.2010**
(21) Application number: 07250210.7
(22) Date of filing: 19.01.2007
(51) Int. Cl.: C08F 222/10, C09D 135/00, C07C 69/72, C08F 265/04, C08G 2/26, C08G 16/06, C08K 9/10, C08L 61/00, C09D 201/06

(54) **Encapsulated Michael addition catalyst**
Verkapselter Michael-Additionskatalysator
Catalyseur encapsulé d'addition de Michael

(30) Priority: 25.01.2006 US 762202 P
(43) Date of publication of application: 01.08.2007
(73) Proprietor: Rohm and Haas Company, Philadelphia, PA 19106-2399 (US)
(72) Inventor: Brinkman, Frank Larry, Woodstock, Illinois 60098 (US); Kauffman, Thomas Frederick, Harleysville, Pennsylvania 19438 (US)
(74) Representative: Kent, Venetia Katherine

(56) References cited:
- WO-A-96/27641
- US-A- 5 002 849
- US-A- 5 350 875
- US-A1- 2004 057 909
- US-A1- 2005 081 994
- US-B1- 6 224 793
- R.E. SPARKS: "Conventional microencapsulation techniques" KIRK-OTHMER ENCYCLOPEDIA OF CHEMICAL TECHNOLOGY, 1981, pages 470-493, XP008084885

## Description

The present invention relates to compositions useful for preparing adhesives. The invention is directed to a method of bonding at least two or more substrates by the application of compositions that cure by reaction of multifunctional acrylates with active methylene compounds via a carbon Michael addition reaction utilizing encapsulated base catalysts.

The Michael addition reaction is a known process wherein a Michael acceptor is reacted with a Michael donor to elongate a carbon chain. Michael addition is taught, for example, by RT Morrison and RN Boyd in Organic Chemistry, third edition, Allyn and Bacon, 1973 . The reaction is believed to take place between a Michael donor and a Michael acceptor, in the presence of a base catalyst.

U.S. Patent Application Publ. No. 2005/0081994 discloses use of strong base catalysts to cure Michael addition compositions which are useful for adhesives, sealants, elastomers, and foams. Strong bases are desirable in that they lead to very fast curing, however, strong bases introduce difficulties for many processes resulting in short pot-life. The use of strong bases typically requires the use of two-part systems in which the base is added to one part and is kept isolated from the second part (co-reactant) until just prior to use. Upon mixing the two components of the strong base catalyzed Michael addition compositions, rapid reaction leading to full cure is exhibited. One limitation is that rapid reaction results initially in a dramatic increase in viscosity and difficulty in processing and handling followed by ultimate cure. The premature dramatic increase in viscosity upon mixing is known as short pot-life. To overcome this short-coming, application methods must be used (e.g. extrusion) which consume the mixed material immediately. Another related limitation is that such mixing and application systems do not lend themselves to many intermittent industrial manufacturing operations.

US 2004/057909 discloses dental polymer film comprising a Michael donor, a Michael acceptor and a catalyst.

US-B1-6 224 793 discloses an encapsulated active agent comprising an active agent encapsulated in a crystallisable or thermoplastic polymer wherein the particle size of the encapsulated active agent is 3,000 microns or less wherein the active agent is not significantly extractable from the particles under ambient conditions.

US-A-5 350 875 discloses the preparation of compounds varying from liquids to solids prepared via a reaction in which at least one Michael donor is reacted with one or more Michael acceptors in the presence of an undissolved basic compound as catalyst.

WO96/27641A discloses polymeric materials which comprise (i) a crystalline polymeric moiety which melts over a relatively small temperature range and (ii) an active chemical moiety.

One-part compositions are much more desirable for use as adhesives, coatings, foams, elastomers, sealants and other industrially useful end-uses for polymers in that they require less complexity and less sophisticated equipment on the part of the user. Although more desirable than two-part systems, one-part systems are impossible to achieve by the addition of a strong base to the Michael donor and acceptor since reaction will occur immediately resulting in an intractable cured mass prior to satisfactory coating or processing of the material.

Weak base catalysts are advantageous over strong bases in that they have less tendency to degrade or hydrolyze the polymer and reactants than strong bases. Use of weak bases to catalyze Michael addition reactions, however, is less well known than strong bases due to a much slower reaction rate especially at ambient temperatures than for strong bases. Encapsulation of weak bases, however, overcomes this deficiency by allowing the use of a larger amount of weak bases to compensate for reduced strength and still allowing for extended open time prior to breakage of the capsules and more controllable pot-life. Encapsulation of weak bases also allows for one-part systems.

It is therefore desirable to introduce a method of achieving one-part Michael addition compositions which cure on demand and not prior to demand. It is also desirable to introduce two-part Michael addition compositions which have long pot-life and still result in rapid cure upon demand (such as when applied to a substrate surface to be coated or to two surfaces to be bonded). It is also desirable to introduce one or to-part Michael addition compositions that utilize weak base catalysts but still maintain extended open time and controllable pot-life.

Inventors have discovered that encapsulated base catalysts in the presence of Michael donors and acceptors result in compositions useful as adhesives, sealants, coatings, elastomers, films, and foams by providing unprecedented control over pot-life and cure rate in a two-part or multi-component system and allowing for use as a one-part composition. Encapsulated catalysts prevent premature reaction of the various reactants during storage and processing and yet, upon the rupture of the capsules by a pre-determined event such as the application of heat, pressure, or solvation, produce rapid cure. Use of encapsulated catalysts gives unprecedented control over pot-life and cure rate over compositions previously contemplated. As such the use of encapsulated catalysts also results in the potential for one-part Michael addition compositions previously not known. The use of encapsulated catalysts also allows for faster green strength development by providing for a very rapid cure upon rupture of the capsules.

Accordingly, the invention provides a method for bonding at least two or more substrates comprising the steps of: (a) applying to at least one substrate a composition comprising: (i) at least one Michael donor; (ii) at least one Michael acceptor; and (iii) one or more encapsulated catalysts, the one or more encapsulated catalysts prepared in capsules having an average particle size of from 0.1 to 500 µm; (b) contacting said composition to a second substrate; (c) rupturing said capsules by heat, pressure or salvation; and (d) allowing said composition to cure by Michael addition.

Use of higher molecular weight materials is known to be a desirable method to increase the strength of the blended two-part compositions prior to cure (increased green strength). The use of high molecular weight components typically results in increased viscosity, however, which typically negatively effects processing. Processing of reactive two-part materials on application equipment such as multi-roll applicators requires formulating the reactant compositions so that they exhibit a suitable low viscosity to allow flow and deposition onto the substrates. If viscosity is too high at ambient temperatures the temperature of the rollers can be elevated to reduce the viscosity. This approach for two-part systems, however, dramatically reduces pot-life. The use of encapsulated catalysts, however, is one method to allow utilization of higher molecular reactants and allow use of heat for processing of the composition without pre-cure of the reactants. The use of the encapsulated catalysts thereby provides several routes to fast green strength development.

A "Michael donor," as used herein, is a compound with at least one Michael donor functional group, which is a functional group containing at least one Michael active hydrogen atom, which is a hydrogen atom attached to a carbon atom that is located between two electron-withdrawing groups such as C=O and/or C N. Examples of Michael donor functional groups include malonate esters, acetoacetate esters, malonamides, and acetoacetamides (in which the Michael active hydrogens are attached to the carbon atom between two carbonyl groups); and cyanoacetate esters and cyanoacetamides (in which the Michael active hydrogens are attached to the carbon atom between a carbonyl group and a cyano group). A compound with two or more Michael active hydrogen atoms is known herein as a multi-functional Michael donor. As used herein, the "skeleton" of a Michael donor is the portion of the donor molecule other than the functional group(s) containing Michael active hydrogen atoms.

Michael donors useful in the present invention are selected from methyl acetoacetate, ethyl acetoacetate, n-propyl acetoacete, isopropyl acetoacetate, n-butyl acetoacetate, t-butyl acetoacetate, ethylene glycol bisacetoacetate, 1,2 propanediol bisacetoacetate, 1,3 propanediol bisacetoacetate, 1,4 butanediol bisacetoacetate, neopentyl glycol bisacetoacetate, isosorbide bisacetoacetate, trimethylol propane tris acetoacetate, glycerol tris acetoacetate, castor oil tris acetoacetate, glucose tris acetoacetate, glucose tetraacetoacetate, sucrose acetoacetates, sorbitol tris acetoacetate, sorbitol tetra acetoacetate, acetoacetates of ethoxylated and propoxylated diols, triols and polyols such as ethoxylated neopentyl glycol bisacetoacetate, propoxylated glucose acetoacetatates, propoxylated sorbitol acetoacetates, propoxylated sucrose acetoacetates, polyester acetoacetatates in which the polyester is derived from at least one di acid and at least one diol, polyesteramide acetoacetates in which the polyesteramide is derived from at least one di acid and at least one diamine, 1,2 ethylene bisacetamide, 1,4 butane bisacetamide, 1,6 hexane bisacetoacetamide, piperazine bisacetamide, acetamides of amine terminated polypropylene glycols, acetamides of polyesteramides acetoacetates in which the polyesteramide is derived from at least one di acid and at least one diamine, polyacrylates containing comonomers with acetoacetoxy functionality (such as derived from Acetoacetoxyethyl Methacrylate), and polyacrylates containing acetoacetoxy functionality and silylated comonomers (such as vinyl trimethoxysilane).

A "Michael acceptor," as used herein, is a compound with at least one functional group with the structure **(I)** 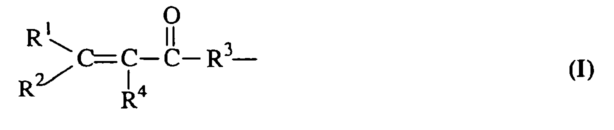 where R¹, R², and R⁴ are, independently, hydrogen or organic radicals such as for example, alkyl (linear, branched, or cyclic), aryl, aryl-substituted alkyl (also called aralkyl or arylalkyl), and alkyl-substituted aryl (also called alkaryl or alkylaryl), including derivatives and substituted versions thereof. R¹, R², and R⁴ may or may not, independently, contain ether linkages, carboxyl groups, further carbonyl groups, thio analogs thereof, nitrogen-containing groups, or combinations thereof. R³ is oxygen, a nitrogen-containing group, or any of the organic radicals described above for R¹, R², and R⁴. A compound with two or more functional groups, each containing structure (I), is known herein as a multi-functional Michael acceptor. As used herein, the "skeleton" of a Michael acceptor is the portion of the acceptor molecule other than structure (I). Any structure (I) may be attached to another (I) group or to the skeleton directly.

Suitable skeletons for Michael donors useful in the present invention include alcohols such as methanol, ethanol, n-propanol, isopropanol, butanol, sec-butanol, tert-butanol, and higher alcohols.

Suitable skeletons for both Michael donors and acceptors useful in the present invention include but are not limited to diols such as ethylene glycol, propylene glycol, propanediol, butanediol, diethylene glycol, neopentyl glycol, triethylene glycol, hexanediol, dipropylene glycol, cyclohexanedimethanol, tetraethylene glycol, 2,2,4-trimethyl-1,3 pentanediol, tripropylene glycol and tricyclodecanedimethylol, triols such as glycerol, propoxylated glycerol, trimethylol propane and castor oil, polyhydric alcohols such as pentaerythritols, dipentaerythritols, polyhydric alkylene oxides and other polyhydric polymers, saccharides including glucose, fructose, maltose, sucrose, sorbitol and isosorbide, and epoxides including bisphenol A diglycidyl ether, epoxidized polybutadiene and epoxidized soybean oil. Also contemplated are similar alcohols and epoxides, substituted versions thereof, and mixtures thereof. Also contemplated as suitable skeletons are amines such as ethylene diamine, 1,6 hexane diamine and piperazine.

In the practice of the present invention, the skeleton of the multi-functional Michael acceptor may be the same or different from the skeleton of the multifunctional Michael donor. It is further contemplated that mixtures containing more than one Michael donor or more than one Michael acceptor may be used.

The basic catalysts which are useful include both strong base catalysts (pKb of 11.0 or greater) and weak base catalysts (pKb from 4 to 11). Examples of suitable strong base catalysts include guanidines, amidines, hydroxides, alkoxides, silicates, alkali metal phosphates, and oxides including but not limited to tetra methyl guanidine (TMG), 1,8-Diazabicyclo(5.4.0)undec-7-ene (DBU), 1,5- Diazabicyclo(4.3.0)non-5-ene (DBN), 1,4 diazabicyclo (2.2.2)octane (DABCO), tertiary butyl ammonium hydroxide (TBAH), sodium hydroxide, potassium hydroxide, sodium methoxide, sodium ethoxide, tri potassium phosphate, sodium silicate and calcium oxide. Suitable weak base catalysts include tertiary amines, alkali metal carbonates, alkali metal bicarbonates, alkali metal hydrogen phosphates, phosphines, alkali metal salts of carboxylic acids including but not limited to triethylamine, sodium carbonate, potassium carbonate, sodium bicarbonate, potassium bicarbonate, potassium hydrogen phosphate (mono-basic and di-basic), triphenyl phosphine, triethyl phosphine, potassium acetate, potassium acrylate. The catalysts may be encapsulated in their pure or neat state or in a solvent such as ethanol or water. It is recognized that some catalysts are most desirably encapsulated as a solution.

The encapsulated catalysts typically are produced by deposition of a shell around the catalyst. The catalyst may be contained in one single cavity or reservoir within the capsule or may be in numerous cavities within capsule. The thickness of the shell may vary considerably depending on the materials used, loading level of catalyst, method of forming the capsule, and intended end-use. Loading levels of catalyst are preferably 5 to 90%, more preferably 10-90% and most preferably from 30-90%. Certain encapsulation processes lend themselves to higher core volume loading than others. More than one shell may be desirable to ensure premature breakage or leaking.

The encapsulated catalysts can be made by any of a variety of micro-encapsulation techniques including but not limited to coacervation, interfacial addition and condensation, emulsion polymerization, microfluidic polymerization, reverse micelle polymerization, air suspension, centrifugal extrusion, spray drying, prilling, Bitem^{™} process, pan coating, and by the M-CAP^{™} encapsulation process.

Coacervation is a basic process of capsule wall formation. The encapsulation process was discovered and developed in the 1950s. Examples of the coacervation process are listed in U.S. Pat. Nos. 2,800,457 and 2,800,458. Coacervative encapsulation is a three step process: particle or droplet formation; coacervative wall formation; and capsule isolation. The first coacervative capsules were made using gelatin as a wall in an "oil- in-water " system. Later developments produced "water-in-oil" systems for highly polar and water soluble cores.

The M-CAP^{™} process is recognized as a preferred method to make 30 micron particle size encapsulated catalysts with high core loading volume (>75%) which can be ruptured with pressure. The M-CAP^{™} process is described in detail in U.S. Pat. No. 5,271,881.

Prilling is also recognized as a preferred method for encapsulation allowing for use of highly crystalline waxes with excellent barrier properties to prevent premature release of the catalyst. Prilling which is also known as spray congealing, spray chilling or melt atomization provides capsules of sizes between 0.5 µm and 3000 µm with typical loading levels of catalyst of from 5 to 50 %. This is a preferred process for encapsulation of organic soluble strong bases such as TMG and DBU. Preferred shell materials for encapsulation via the prilling method include paraffin waxes, synthetic waxes, microcrystalline waxes, vegetable waxes, polyethylene waxes, and low molecular weight polymers. Most preferred shell materials for prilling are paraffin waxes, polyethylene waxes, Fischer-Tropsch waxes with melt points of from 40-120 °C.

The Bitem^{™} process is another suitable example of an encapsulation technique for aqueous solutions of bases such as aqueous solution of potassium carbonate, tri-potassium phosphate, or potassium acetate. Similar to the prilling process in that it allows for use of highly crystalline waxes with excellent barrier properties to prevent premature release of the catalyst. This process results in capsules of 50 -500 µm in which small chambers containing aqueous catalyst solution are imbedded in a wax matrix. Preferred shell materials for encapsulation via the prilling method include paraffin waxes, synthetic waxes, microcrystalline waxes, vegetable waxes, polyethylene waxes, and low molecular weight polymers. Most preferred shell materials for prilling are paraffin waxes, polyethylene waxes, Fischer-Tropsch waxes with melt points of from 40-120 °C.

Independent of encapsulation technique the materials used to encapsulate the catalyst may include synthetic waxes, microcrystalline waxes, vegetable waxes, polyethylene waxes, polyamides, polyureas (such as polymethyl urea or PMU), Michael addition polymers (i.e. reaction product of a donor such as acetoacetate or malonate and an acceptor such as a multi-functional acrylate), polyacrylates, side chain crystallizable polyacrylates, polyvinyl alcohol, crosslinked polyvinyl alcohol using crosslinkers such as borates, polydimethyl siloxanes, carboxymethyl cellulose, polystyrene, polyethylene vinyl acetate copolymers, polyethylene acrylate copolymers, polyalpha olefins, polyethylenes, polyethylenes prepared via heterogenous catalysis (e.g. metallocene catalyzed), polypropylene, polypropylenes prepared via heterogenous catalysis (e.g. metallocene catalyzed).

Highly crystalline, sharp melting point materials such as paraffin waxes, synthetic waxes, and polyethylene waxes and highly crystalline, low molecular weight polymers such as side chain crystallizable polyacrylates offer the potential for heat triggered release of the catalyst by judicious selection of the melt point to coincide with the ultimate processing conditions of the composition.

Also contemplated are water sensitive polymers and waxes for use as encapsulants. Preferrably such water sensitive encapsulants are crystalline or semi-crystalline such as polyethyleneglycol (PEG) or polyvinyl alcohol (PVOH). Other useful non-crystalline or semi-crystalline water sensitive polymers include starch, hydrophobically modified starch, cellulose derivatives such as hydroxypropylcellulose, and polyethyloxazoline.

For the preparation of shells around the basic catalysts of this invention an especially useful approach is to utilize the reaction of a Michael donor and acceptor. This approach overcomes the challenge of other polymerizations which require acid catalysis.

Use of several shells or several separate coatings may be desirable to provide sufficient shell strength and integrity to prevent premature initiation of reaction of the reactants in a one-part formulation containing the encapsulated catalyst. An example of such a multi-shell capsule would be a paraffin or micro-crystalline wax shell (such as accomplished by prilling) followed by a polymethylurea (PMU) shell. Another example would be use of a wax shell followed by a shell prepared by the carbon Michael addition.

The preferred particle sizes of the capsules are 0.1 to 500 µm and preferably 0.1 to 100 µm. The particle size of the capsules may be tailored to the application to ensure rupture under predetermined conditions.

Although typically the preferred particles size distribution is narrow, the particle size distribution can be narrow or broad. Examples of acceptable particle size distribution are shown in Table 1.

**Table 1. Particle sizes of capsules of encapsulated catalysts**

| **mean particle size** | **standard deviation** |
|---|---|
| 33.2 µm | 16.3µm |
| 283.5 µm | 143.3 µm |
| 425.2 µm | 270.3 µm |

Another approach to encapsulating the basic catalysts of this invention is to use liquid polymers such as liquid or depolymerized polyisoprene, liquid polybutadienes, or liquid polyacrylates to coat a finely ground solid catalyst. Such liquid polymers have Mn below 50,000, including Mn below 40,000, and Mn below 30,000. Examples of suitable solid catalysts for such encapsulation are carbonates, bicarbonates, phosphates, hydrogen phosphates, and silicates.

Michael addition compositions using the encapsulated catalysts are useful upon curing as adhesives for a variety of applications including but not limited to adhesives for flexible laminating, industrial laminating, product assembly, construction, automotive, consumer and do it yourself (DIY), electronics (bonding, potting, and encapsulation), dental, and medical device assembly.

For flexible packaging adhesive applications mean particle sizes are preferably from 0.1 to 300 µm so that compression of the thin adhesive layer (2.5 µm) between thin polymeric films (12 to 48 µm) with compression rollers can be used to rupture the capsules. Alternatively, use of heated rollers or passing the laminate through an oven can melt the capsules.

For assembly and industrial (rigid) laminating adhesives the mean particle size is preferably 10 to 500 µm due to the much thicker adhesive layer between substrates. Such capsules can be crushed by the high pressure compression processes used in industrial bonding processes or may alternatively be melted by passing through an oven or "heat nip". For extrusion processes such as are used in foam and elastomer manufacturing capsules are typically introduced in an addition port either as a powder or in a masterbatch of other polymers. The mean particle size of the encapsulated catalyst used for foams and elastomers prepared by extrusion is typically 50 to 500 µm.

### Materials:

SR-259^{™} - polyethylene glycol diacrylate from Sartomer company

MorCure 2000 ™ -Bisphenol A diglycidyl epoxy diacrylate from Rohm and Haas Company

TMP tris AcAc - trimethylolpropane tris acetoacetate

### Examples:

A variety of capsules were made of base catalysts using paraffin and microcrystalline waxes including:

| Example | Mean particle size (microns) | Wax type (melt point) / Catalyst type | ratio (catalyst/wax) |
|---|---|---|---|
| 1 | 283.5 | 50-53C/50% K2CO3 | 1:1 |
| 2 | 331.5 | 50-53C/50% K2CO3 | 1:3 |
| 3 | 266.3 | 90-94C/50% K2CO3 | 1:1 |
| 4 | 263.5 | 90-94C/50% K2CO3 | 1:3 |
| 5 | 170.2 | 50-53C/TMG | 1:1 |
| 6 | 152.7 | 50-53C/DBU | 1:1 |
| 7 | 425.2 | 50-53C/TMG | 1:3 |
| 8 | 293.5 | 90-94C/DBU | 1:1 |
| 9 | 366.3 | 90-94C/DBU | 1:3 |

To confirm that the encapsulated catalysts could be broken with pressure, digitized photographs were taken before and after the application of 140 kPa (20 PSI) pressure.

Encapsulated catalysts were then formulated into adhesive compositions based on the carbon Michael addition chemistry.

| | Mean particle size (microns) | Standard deviation particle size (microns) | wax/ catalyst | ratio (cat/wax) | 2-1 | 2-3 | 2-4 | 2-5 |
|---|---|---|---|---|---|---|---|---|
| TMP tris AcAc | | | | | 15 | 15 | 15 | 15 |
| SR-259^{™} | | | | | 7.13 | 7.13 | 7.13 | 7.13 |
| Morcure 2000^{™} | | | | | 16.6 | 16.6 | 16.6 | 16.6 |
| succinic anhydride | | | | | 0.1 | 0.1 | 0.1 | 0.1 |
| 2 | 331.5 | 119.5 | 50-53C/ 50% K2CO3 | 1:3 | | 1 | | |
| 3 | 266.3 | 109.8 | 90-94C/ 50% K2CO3 | 1:1 | | | 1 | |
| 4 | 263.5 | 117.3 | 90-94C/ 50% K2CO3 | 1:3 | | | | 1 |
| | | | | | | | | |
| Viscosity (27C) initial-mPa.s (cps) | | | | | 1190 | 1396 | 1449 | 1310 |
| Viscosity (27C) 16 hr @ RT-mPa.s (cps) | | | | | 1449 | 2347 | 2479 | 2068 |

The above formulations were tested for bond development and adhesion using compression and exposure to heat. Bonds were evaluated after 24hrs.

| | **2-1 (no catalyst)** | **2-3** | **2-4** | **2-5** |
|---|---|---|---|---|
| **Wood/wood** Compression @RT (17.3 kPa (2.51 b/in²)) For 24 hrs | No bond strength | Significant bond strength | Significant bond strength | Significant bond strength |
| **Wood/wood** Heated to 110C for 1 hr (17.3 kPa (2.51b/in²) compression) | No bond strength upon removal from oven | Significant bond strength upon removal from oven | Significant bond strength upon removal from oven | Significant bond strength upon removal from oven |

### Examples of Encapsulated, Michael Addition Catalyst, using depolymerized polyisoprene, cis 1,4 polyisoprene as a coating.

An encapsulated catalyst was prepared from 2 grams Na2CO3, ground to pass a 44 micron (325 mesh) screen, then dried 2 hours at 110 °C, and mixed with 5 grams Isolene ™ 40, as a coating. Example 10 summarizes a laminating adhesive formulation.

### Example 10

| | |
|---|---|
| Morecure^{™} 2000 | 20.69 |
| Miramer^{™} M 280 | 18.10 |
| SR 9020 | 11.20 |
| Glycerol tris AcAc | 9.23 |
| Castor Oil tris AcAc | 7.20 |
| Total | 66.42 |

### Example 11

The laminating adhesive formulation of Example 10 (66.42 grams) was mixed with 7 grams, Isolene^{™} 40 coated Na₂CO₃, giving 2.7 % Na₂CO₃ in the final formulated adhesive. Viscosity data were measured for the adhesive and summarized as follows:

| | |
|---|---|
| Initial viscosity 25 C | 1000 mPa.s (cps) |
| 48 hours viscosity 25 C | 1000 mPa.s (cps) |
| 8 day viscosity 25 C | 3600 mPa.s (cps) |

The laminating adhesive formulation was applied to primed, 25 X 76 mm (1X3 inch) aluminum coupons. The coupons were misted with deionized water, laminated to primed 25 X 76 mm (1X3 inch) aluminum coupons to form a 25mm (1 inch) overlap and allowed to cure 24 hours at room temperature. The laminating adhesive formulation was mixed with a small amount of deionized water and applied to primed aluminum coupons to form 25 mm (1 inch) overlap laminates as above.

Average 24 hour tensile strength data are summarized below for laminates prepared using an encapsulated catalyst in the laminating adhesive formulation.

| | |
|---|---|
| Misted | 530 kPa (77.4 psi) |
| Water mix | 720 kPa (103.7 psi) |

A laminating adhesive formulation was prepared and is summarized in Example 12.

### Example 12

| | |
|---|---|
| Morecure^{™} 2000 | 41.3 |
| Miramer^{™} M 280 | 17.7 |
| TMPtris AcAc | 41.0 |
| Total | 100 |

### Example 13

The laminating adhesive formulation of Example 12 (100 grams) was mixed with 10.4 grams of an encapsulated catalyst, as described above, to give 2.7 % by weight of catalyst in the adhesive formulation.

Viscosity data were measured for the adhesive and summarized as follows:

| | |
|---|---|
| Initial viscosity @ 25 C | 2600 mPa.s (cps) |
| 24 hour viscosity | 2600 mPa.s (cps) |

The laminating adhesive formulation of Example 13 was applied to primed aluminum coupons, misted and laminated to form 25mm (1 inch) overlap laminates as above. The adhesive formulation was mixed with a small amount of deionized water, applied to primed aluminum coupons and laminated to form 25mm (1 inch) overlap laminates, as above.

Average 24 hour tensile strength data are summarized below for laminates prepared using an encapsulated catalyst in the laminating adhesive formulation.

**Average tensile strengths**

| | |
|---|---|
| Misted 24 hours | 1.32 MPa (191.9 psi) |
| Misted 48 hours | 1.74 MPa (252.1 psi) |
| Water mix | 1.34 MPa (193.7 psi) |
| Water mix | 2.41 MPa (350.0 psi) |

An encapsulated catalyst was prepared from 2 grams Na₂CO₃, ground to pass a 44 micron (325 mesh) screen, dried 2 hours @ 110 C, and was mixed with 5 grams Isolene ™ 400 to coat the catalyst.

### Example 14

The laminating adhesive formulation of Example 12 (100 grams) was mixed with 10.4 grams of the catalyst, to give 2.7 % catalyst in final adhesive formulation. Viscosity data were measured for the adhesive and summarized as follows

| | |
|---|---|
| Initial viscosity 25 C | 4800 mPa.s (cps) |
| 24 hour viscosity 25 C | 4800 mPa.s (cps) |

The laminating adhesive of Example 14 was applied to primed aluminum coupons, misted with deionized water and laminated as above. Average 24 hour tensile strength data are summarized below for laminates prepared using an encapsulated catalyst in the laminating adhesive formulation.

### Average tensile strength

| | |
|---|---|
| Misted 24 hours | 1.18 MPa (171.5 psi) |
| Misted 48 hours | 1.31 MPa (189.9 psi) |

Isolene ^{™} is supplied by Elementis Specialties, 600 Cortlandt St, Belleville, NJ 07109. Isolene ^{™} 40; Mw = 32,000. Isolene ^{™} 400; Mw = 65,000.

## Claims

1. A method of bonding at least two substrates comprising the steps of:
(a) applying to at least one substrate a composition comprising₋
(i) at least one Michael acceptor selected from compounds having at least one functional group with the structure (I) 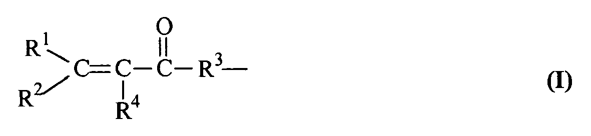 wherein R¹,R², and R⁴ are, independently, hydrogen or organic radicals wherein R³ is oxygen, a nitrogen-containing group, or an organic radical;
(ii) at least one Michael donor selected from the group consisting of: methyl acetoacetate, ethyl acetoacetate, n-propyl acetoacetate, isopropyl acetoacetate, n-butyl acetoacetate, t-butyl acetoacetate, ethylene glycol bisacetoacetate, 1,2 propanediol bisacetoacetate, 1,3 propanediol bisacetoacetate, 1,4 butanediol bisacetoacetate, neopentyl glycol bisacetoacetate, isosorbide bisacetoacetate, trimethylol propane tris acetoacetate, glycerol tris acetoacetate, castor oil tris acetoacetate, glucose tris acetoacetate, glucose tetraacetoacetate, sucrose acetoacetates, sorbitol tris acetoacetate, sorbitol tetra acetoacetate, acetoacetates of ethoxylated and propoxylated diols, triols and polyols, ethoxylated neopentyl glycol bisacetoacetate, propoxylated glucose acetoacetates, propoxylated sorbitol acetoacetates, propoxylated sucrose acetoacetates, polyester acetoacetates in which the polyester is derived from at least one did acid and at least one diol, polyester amide acetoacetates in which the polyester amide is derived from at least one did acid and at least one diamine, 1,2 ethylene bisacetamide, 1,4 butane bisacetamide, 1,6 hexane bisacetoacetamide, piperazine bisacetamide, acetamides of amine terminated polypropylene glycols, acetamides of polyesteramides acetoacetates in which the polyesteramide is derived from at least one di acid and at least one diamine, polyacrylates containing comonomers with acetoacetoxy functionality, and polyacrylates containing acetoacetoxy functionality and silylated comonomers;
(iii) and at least one encapsulated catalyst selected from the group consisting of: guanidines, amidines, hydroxides, alkoxides, oxides, tertiary amines, alkali metal carbonates, alkali metal bicarbonates, alkali metal phosphates, alkali metal hydrogen phosphates, phosphines, alkali metal salts of carboxylic acids, alkali silicates, tetra methyl guanidine, 1,8-Diazabicyclo(5.4.0)undec-7-ene, 1,5- Diazabicyclo(4.3.0)non-5-ene, 1,4 diazabicyclo (2.2.2)octane, tertiary butyl ammonium hydroxide, sodium hydroxide, potassium hydroxide, sodium methoxide, sodium ethoxide, tri potassium phosphate, calcium oxide, triethylamine, sodium carbonate, potassium carbonate, sodium bicarbonate, potassium bicarbonate, potassium hydrogen phosphate (mono-basic and di-basic), triphenyl phosphine, triethyl phosphine, sodium silicate, potassium acetate, potassium acrylate, and potassium octanoate,
wherein the capsules of the one or more encapsulated catalysts have a particle size of from 0.1 to 500 µm,
(b) contacting said composition to a second substrate;
(c) rupturing said capsules by heat, pressure, or solvation; and
(d) allowing said composition to cure by Michael addition after said step (b).

2. The method of claim 1, wherein each of said R¹, R², and R⁴ is independently selected from hydrogen and organic radicals selected from alkyl, aryl, aryl-substituted alkyl, and alkyl-substituted aryl, and wherein said R³ is oxygen, a nitrogen-containing group, or an organic radical selected from alkyl, aryl, aryl-substituted alkyl, and alkyl-substituted aryl.

3. The method of claim 1, wherein the capsules of the one or more encapsulated catalysts have a particle size of from 0.1 to 100 µm.

4. The method of claim 1, wherein the capsules of said one or more encapsulating agent is selected from synthetic waxes, microcrystalline waxes, vegetable waxes, polyethylene waxes, polyamides, polyureas, Michael addition polymers, polyacrylates, side chain crystallizable polyacrylates, polyvinyl alcohol, crosslinked polyvinyl alcohol using crosslinkers such as borates, polydimethyl siloxanes, carboxymethyl cellulose, polystyrene, polyethylene vinyl acetate copolymers, polyethylene acrylate copolymers, polyalpha olefins, polyethylenes, polyethylenes prepared via heterogeneous catalysis, polypropylene, and polypropylene.

## Patentansprüche

1. Verfahren zum Verbinden mindestens zweier Substrate, umfassend die Schritte:
(a) das Aufbringen, auf mindestens ein Substrat, einer Zusammensetzung, umfassend:
(i) mindestens einen Michael-Akzeptor, ausgewählt aus Verbindungen, welche mindestens eine funktionelle Gruppe mit der Struktur (I) aufweisen, 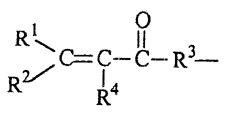 wobei R¹, R² und R⁴ unabhängig Wasserstoff oder organische Reste sind, wobei R³ Sauerstoff, eine stickstoffhaltige Gruppe oder ein organischer Rest ist;
(ii) mindestens einen Michael-Donor, ausgewählt aus der Gruppe, bestehend aus: Methylacetacetat, Ethylacetacetat, n-Propylacetacetat, iso-Propylacetacetat, n-Butylacetacetat, t-Butylacetacetat, Ethylenglycol-bis-acetacetat, 1,2-Propandiol-bis-acetacetat, 1,3-Propandiol-bis-acetacetat, 1,4-Butandiol-bis-acetacetat, Neopentylglycol-bis-acetacetat, Isosorbid-bis-acetacetat, Trimethylolpropan-tris-acetacetat, Glycerin-tris-acetacetat, Rizinusöl-tris-acetacetat, Glucose-tris-acetacetat, Glucose-tetra-acetacetat, Sucroseacetacetaten, Sorbitol-tris-acetacetat, Sorbitol-tetra-acetacetat, Acetacetaten von ethoxylierten und propoxylierten Diolen, Triolen und Polyolen, ethoxylierten Neopentylglycol-bisacetacetaten, propoxylierten Glucoseacetacetaten, propoxylierten Sorbitolacetacetaten, propoxylierten Sucroseacetacetaten, Polyesteracetacetaten, in welchen der Polyester von mindestens einer Disäure und von mindestens einem Diol abgeleitet ist, Polyesteramidacetacetaten, in welchen das Polyesteramid von mindestens einer Disäure und von mindestens einem Diamin abgeleitet ist, 1,2-Ethylen-bis-acetamid, 1,4-Butan-bis-acetamid, 1,6-Hexan-bis-acetacetamid, Piperazin-bis-acetamid, Acetamiden von Amin-terminierten Polypropylenglycolen, Acetamiden von Polyesteramidacetacetaten, in welchen das Polyesteramid von mindestens einer Disäure und von mindestens einem Diamin abgeleitet ist, Polyacrylaten, welche Comonomere mit Acetacetoxy-Funktionalität enthalten, und Polyacrylaten, welche Acetacetoxy-Funktionalität und silylierte Comonomere enthalten;
(iii) und mindestens einen eingekapselten Katalysator, ausgewählt aus der Gruppe, bestehend aus: Guanidinen, Amidinen, Hydroxiden, Alkoxiden, Oxiden, tertiären Aminen, Alkalimetallcarbonaten, Alkalimetallbicarbonaten, Alkalimetallphosphaten, Alkalimetallhydrogenphosphaten, Phosphinen, Alkalimetall-Salzen von Carbonsäuren, Alkalisilicaten, Tetramethylguanidin, 1,8-Diazabicyclo-(5.4.0)undec-7-en, 1,5-Diazabicyclo(4.3.0)non-5-en, 1,4-Diazabicyclo(2.2.2)octan, tertiärem Butylammoniumhydroxid, Natriumhydroxid, Kaliumhydroxid, Natriummethoxid, Natriumethoxid, Trikaliumphosphat, Calciumoxid, Triethylamin, Natriumcarbonat, Kaliumcarbonat, Natriumbicarbonat, Kaliumbicarbonat, Kaliumhydrogenphosphat (mono-basisch und di-basisch), Triphenylphosphin, Triethylphosphin, Natriumsilicat, Kaliumacetat, Kaliumacrylat und Kaliumoctanoat,
wobei die Kapseln des einen oder der mehreren eingekapselten Katalysatoren eine Teilchengröße von 0,1 bis 500 µm aufweisen,
(b) das Inkontaktbringen der Zusammensetzung mit einem zweitem Substrat;
(c) das Aufbrechen bzw. Zerreißen der Kapsel mittels Hitze, Druck oder Solvatation; und
(d) das Erlauben der Zusammensetzung durch Michael-Addition nach dem Schritt (b) zu härten.

2. Verfahren nach Anspruch 1, wobei jedes von R¹, R² und R⁴ unabhängig aus Wasserstoff und organischen Resten, ausgewählt aus Alkyl, Aryl, Aryl-substituiertem Alkyl und Alkyl-substituiertem Aryl, ausgewählt sind, und wobei das R³ Sauerstoff, eine stickstoffhaltige Gruppe oder ein organischer Rest, ausgewählt aus Alkyl, Aryl, Aryl-substituiertem Alkyl, und Alkyl-substituiertem Aryl, ist.

3. Verfahren nach Anspruch 1, wobei die Kapseln des einen oder der mehreren eingekapselten Katalysatoren eine Teilchengröße von 0,1 bis 100 µm aufweisen.

4. Verfahren nach Anspruch 1, wobei die Kapseln des einen oder der mehreren Einkapselmittel aus synthetischen Wachsen, mikrokristallinen Wachsen, Naturwachsen, Polyethylen-Wachsen, Polyamiden, Polyharnstoffen, Michael-Additions-Polymeren, Polyacrylaten, Polyacrylaten, deren Nebenketten kristallisierbar sind, Polyvinylalkohol, quervernetzte Polyvinylalkoholen unter Verwendung von Boraten als Quervernetzer, Polydimethylsiloxanen, Carboxymethylcellulose, Polystyrol, Polyethylenvinylacetat-Copolymeren, Polyethylenacrylat-Copolymeren, Polyalphaolefinen, Polyethylenen, Polyethylenen, hergestellt via heterogener Katalyse, Polypropylen und Polypropylen, ausgewählt sind.

## Revendications

1. Procédé de liaison d'au moins deux substrats comprenant les étapes consistant :
(a) à appliquer sur au moins un substrat une composition comprenant
(i) au moins un accepteur de Michael choisi parmi des composés présentant au moins un groupe fonctionnel avec la structure (I) 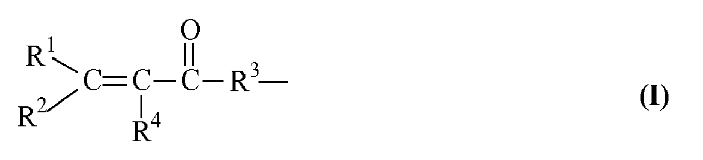 dans laquelle R¹, R² et R⁴ sont indépendamment l'hydrogène ou des radicaux organiques, dans laquelle R³ est l'oxygène, un groupe contenant de l'azote, ou un radical organique ;
(ii) au moins un donneur de Michael choisi dans le groupe constitué de : l'acétoacétate de méthyle, l'acétoacétate d'éthyle, l'acétoacétate de n-propyle, l'acétoacétate d'isoproyle, l'acétoacétate de n-butyle, l'acétoacétate de t-butyle, le bisacétoacétate d'éthylèneglycol, le bisacétoacétate de 1,2-propanediol, le bisacétoacétate de 1,3-propanediol, le bisacétoacétate de 1,4-butanediol, le bisacétoacétate de néopentylglycol, le bisacétoacétate d'isosorbide, le trisacétoacétate de triméthylolpropane, le trisacétoacétate de glycérol, le trisacétoacétate d'huile de ricin, le trisacétoacétate de glucose, le tétraacétoacétate de glucose, les acétoacétates de saccharose, le trisacétoacétate de sorbitol, le tétraacétoacétate de sorbitol, les acétoacétates de diols éthoxylés et propoxylés, les triols et polyols, le bisacétoacétate de néopentylglycol éthoxylé, les acétoacétates de glucose propoxylés, les acétoacétates de sorbitol propoxylés, les acétoacétates de saccharose propoxylés, les acétoacétates de polyester dans lesquels le polyester est dérivé d'au moins un diacide et d'au moins un diol, les acétoacétates de polyesteramide dans lesquels le polyesteramide est dérivé d'au moins un diacide et d'au moins d'une diamine, le 1,2-éthylènebisacétamide, le 1,4-butanebisacétamide, le 1,6-hexanebisacétoacétamide, le pipérazinebisacétamide, les acétamides de polypropylèneglycols amine-terminés, les acétamides d'acétoacétates de polyesteramides dans lesquels le polyesteramide est dérivé d'au moins d'un diacide et d'au moins une diamine, les polyacrylates contenant des comonomères avec une fonctionnalité acétoacétoxy et les polyacrylates contenant une fonctionnalité acétoacétoxy et des comonomères silylés ;
(iii) et au moins un catalyseur encapsulé choisi dans le groupe constitué : des guanidines, des amidines, des hydroxydes, des alcoxydes, des oxydes, des amines tertiaires, des carbonates de métaux alcalins, des bicarbonates de métaux alcalins, des phosphates de métaux alcalins, des hydrogénophosphates de métaux alcalins, des phosphines, des sels de métaux alcalins d'acides carboxyliques, des silicates d'alcalis la tétraméthylguanidine, le 1,8-diazabicyclo(5.4.0)undec-7-ène, le 1,5-diazabicyclo(4.3.0)non-5-ène, le 1,4-diazabicyclo(2.2.2)octane, l'hydroxyde de t-butylammonium, l'hydroxyde de sodium, l'hydroxyde de potassium, le méthoxyde de sodium, l'éthoxyde de sodium, le phosphate de tripotassium, l'oxyde de calcium, la triéthylamine, le carbonate de sodium, le carbonate de potassium, le bicarbonate de sodium, le bicarbonate de potassium, l'hydrogénophosphate de potassium (monobasique et dibasique), la triphénylphosphine, la triéthylphosphine, le silicate de sodium, l'acétate de potassium, l'acrylate de potassium et l'octanoate de potassium, dans lequel les capsules du un ou plusieurs catalyseurs encapsulés présentent une taille de particules de 0,1 à 500 µm,
(b) à mettre ladite composition en contact avec un second substrat ;
(c) à rompre lesdites capsules par de la chaleur, de la pression ou une dissolution ; et
(d) à laisser ladite composition durcir par une addition de Michael après ladite étape (b).

2. Procédé selon la revendication 1, dans lequel chacun desdits R¹, R² et R⁴ est indépendamment choisi parmi l'hydrogène et des radicaux organiques choisis parmi les groupes alkyle, aryle, alkyle aryle-substitués et aryle alkyle-substitués, et dans lequel ledit R³ est l'oxygène, un groupe contenant de l'azote ou un radical organique choisi parmi le groupe alkyle, aryle, alkyle aryle-substitué et aryle alkyle-substitué.

3. Procédé selon la revendication 1, dans lequel les capsules du un ou plusieurs catalyseurs encapsulés présentent une taille de particules de 0,1 à 100 µm.

4. Procédé selon la revendication 1, dans lequel les capsules dudit un ou plusieurs agents d'encapsulation sont choisies parmi des cires synthétiques, des cires microcristallines, des cires végétales, des cires de polyéthylène, des polyamides, des polyurées, des polymères d'addition de Michael, des polyacrylates, des polyacrylates cristallisables à chaîne latérale, du poly(alcool vinylique), du poly(alcool vinylique) réticulé utilisant des réticulants tels que des borates, des polydiméthylsiloxanes, de la carboxyméthylcellulose, du polystyrène, des copolymères de polyéthylène-acétate de vinyle, des copolymères de poly(acrylate d'éthylène), des polyoléfines alpha, des polyéthylènes, des polyéthylènes préparés par catalyse hétérogène, du polypropylène et du polypropylène.
